# EUROPEAN PATENT APPLICATION

(11) **EP 4 325 706 A1**
(43) Date of publication of application: **21.02.2024**
(21) Application number: 22787643.0
(22) Date of filing: 15.04.2022
(51) Int. Cl.: H02M 1/36

(54) **CONNECTOR, SWITCHING POWER SUPPLY, AND COMMUNICATION POWER SUPPLY SYSTEM**

(30) Priority: 16.04.2021 CN 202110414448
(71) Applicant: ZTE Corporation, Shenzhen, Guangdong 518057 (CN)
(72) Inventor: GAO, Cheng, Shenzhen, Guangdong 518057 (CN); TU, Darui, Shenzhen, Guangdong 518057 (CN); ZHOU, Wei, Shenzhen, Guangdong 518057 (CN); CHENG, Shuang, Shenzhen, Guangdong 518057 (CN); ZHOU, Jingxuan, Shenzhen, Guangdong 518057 (CN); XU, Xianfeng, Shenzhen, Guangdong 518057 (CN)
(74) Representative: Novagraaf Technologies
(86) International application number: PCT/CN2022/087171
(87) International publication number: WO 2022/218421

(57) **Abstract**

A connector (120), a switching power supply (10), and a communication power supply system are provided. The connector (120) includes a first connection member (121), a second connection member (122), a capacitive precharge circuit (123), and a control circuit (124). The first connection member (121) is detachably connected to the second connection member (122), the first connection member (121) is connected to an output end of a power supply apparatus, and the second connection member (122) is connected to a direct current bus (20). The capacitive precharge circuit (123) and the control circuit (124) are both arranged on the first connection member (121), the capacitive precharge circuit (123) is connected to a capacitive circuit (111), and the control circuit (124) is configured to control the power supply apparatus (110) to be powered on and powered off. In a process of plugging the first connection member (121) into the second connection member (122), the direct current bus (20) charges the capacitive circuit (111) through the capacitive precharge circuit (123), and then the control circuit (124) controls the power supply apparatus (110) to be powered on. In a process of pulling out the first connection member (121) from the second connection member (122), the control circuit (124) controls the power supply apparatus (110) to be powered off before the power supply apparatus (110) is disconnected from the direct current bus (20). It can be seen that the solution can reduce power consumption of the switching power supply (10) and meanwhile simplify a structure of the switching power supply (10).

## Description

### Cross-Reference to Related Application

The present disclosure claims the priority to CN202110414448.8, filed on April 16, 2021 and entitled "Connector, Switching Power Supply, and Communication Power Supply System", which is incorporated in its entirety herein by reference.

### Technical Field

The present disclosure relates to the technical field of electricity, and particularly relates to a connector, a switching power supply, and a communication power supply system.

### Background

A communication power supply system, as an important part of a communication system, is generally provided with a plurality of switching power supplies to ensure reliability. Based on this configuration, the switching power supply can generally support hot plugging and pulling-out for achieving flexibility of the communication power supply system. That is, plugging and pulling-out of the switching power supply do not influence normal operation of the communication power supply system.

The hot plugging and pulling-out of the switching power supply may lead to arcing (also referred to as sparking). The high temperature and heat caused by the arcing may damage a connector in the switching power supply. Therefore, in the related art, in order to suppress arcing, a current limiting resistor is generally connected in series with an output capacitor of the switching power supply, and a current detection apparatus and an arc extinguishing structure are additionally arranged in the switching power supply. However, the above means adopted in the related art will lead to high power consumption and a complicated structure of the switching power supply.

### Summary

In view of that, embodiments of the present disclosure provide a connector, a switching power supply, and a communication power supply system, such that power consumption of the switching power supply may be reduced, and a structure of the switching power supply may be simplified.

In a first aspect, the embodiments of the present disclosure provide a connector. The connector includes:
a first connection member connected to an output end of a power supply apparatus, where the power supply apparatus is provided with a capacitive circuit at the output end;
a second connection member connected to a direct current bus of a communication power supply system and detachably connected to the first connection member;
a capacitive precharge circuit arranged on the first connection member and connected to the capacitive circuit; and
a control circuit arranged on the first connection member, connected to the power supply apparatus, and configured to control the power supply apparatus to be powered on and powered off.

In a process of plugging the first connection member into the second connection member, the direct current bus charges the capacitive circuit through the capacitive precharge circuit, and then the control circuit controls the power supply apparatus to be powered on. In a process of pulling out the first connection member from the second connection member, the control circuit controls the power supply apparatus to be powered off before the power supply apparatus is disconnected from the direct current bus.

In a second aspect, the embodiments of the present disclosure provide a switching power supply. The switching power supply includes a power supply apparatus and the connector according to the first aspect, and an output end of the power supply apparatus is connected to the connector.

In a third aspect, the embodiments of the present disclosure provide a communication power supply system. The communication power supply system includes a direct current bus and one or more switching power supplies according to the second aspect, and the direct current bus is connected to the one or more switching power supplies.

The embodiments of the present disclosure provide the connector, the switching power supply, and the communication power supply system. The connector includes: the first connection member, the second connection member, the capacitive precharge circuit, and the control circuit. The first connection member is detachably connected to the second connection member, the first connection member is connected to the output end of the power supply apparatus, and the second connection member is connected to the direct current bus. The capacitive precharge circuit and the control circuit are both arranged on the first connection member, the capacitive precharge circuit is connected to the capacitive circuit, and the control circuit is configured to control the power supply apparatus to be powered on and powered off. Based on the above structure, in the process of plugging the first connection member into the second connection member, the direct current bus charges the capacitive circuit through the capacitive precharge circuit, and then the control circuit controls the power supply apparatus to be powered on. In the process of pulling out the first connection member from the second connection member, the control circuit controls the power supply apparatus to be powered off before the power supply apparatus is disconnected from the direct current bus. Compared with the related art, the embodiments of the present disclosure do not need to additionally provide a current limiting resistor on an output capacitor of the switching power supply, such that power consumption of the switching power supply may be reduced; and meanwhile, a current detection apparatus and an arc extinguishing structure do not need to be additionally provided, such that the structure of the switching power supply may be simplified.

### Brief Description of the Drawings

Fig. 1 is a schematic structural diagram of a circuit of a communication power supply system according to an embodiment of the present disclosure;
Fig. 2 is a schematic structural diagram of an exemplary circuit of a communication power supply system;
Fig. 3 is a schematic structural diagram of a circuit of a switching power supply according to an embodiment of the present disclosure;
Fig. 4 is a schematic structural diagram of a circuit of a switching power supply;
Fig. 5 is a schematic structural diagram of a circuit of a connector according to an embodiment of the present disclosure;
Fig. 6 is a schematic diagram of power supply of a control circuit;
Fig. 7 is a schematic structural diagram of circuits of a first connection member and a second connection member;
Fig. 8 is a schematic structural diagram of a circuit of a capacitive precharge circuit;
Fig. 9 is a schematic structural diagram of a circuit of a control circuit;
Fig. 10 is a schematic structural diagram of a circuit of an in-situ detection circuit;
Fig. 11 is a schematic structural diagram of a circuit of a signal processing circuit;
Fig. 12 is a schematic structural diagram of another circuit of a signal processing circuit;
Fig. 13 is a schematic structural diagram of a circuit of a signal filtering circuit; and
Fig. 14 is a schematic structural diagram of an exemplary circuit of a connector according to an embodiment of the present disclosure.

### Detailed Description

Technical solutions in the embodiments provided in the description will be clearly and completely described below with reference to the accompanying drawings in the embodiments of the description. Obviously, the described embodiments are a part of embodiments rather than all the embodiments of the description. All other embodiments obtained by those skilled in the art based on the embodiments of the description without creative efforts shall fall within the protection scope of the description.

A flow diagram shown in the accompanying drawings is only illustrative, and is not intended to include all contents and operations/operations and not intended to be executed in the described order. For instance, some operations/operations may be decomposed, combined, or partially merged, so an actual execution order may change according to an actual situation.

Some embodiments of the description will be described in detail below with reference to accompanying drawings. The following embodiments and features in the embodiments may be combined with each other without conflict.

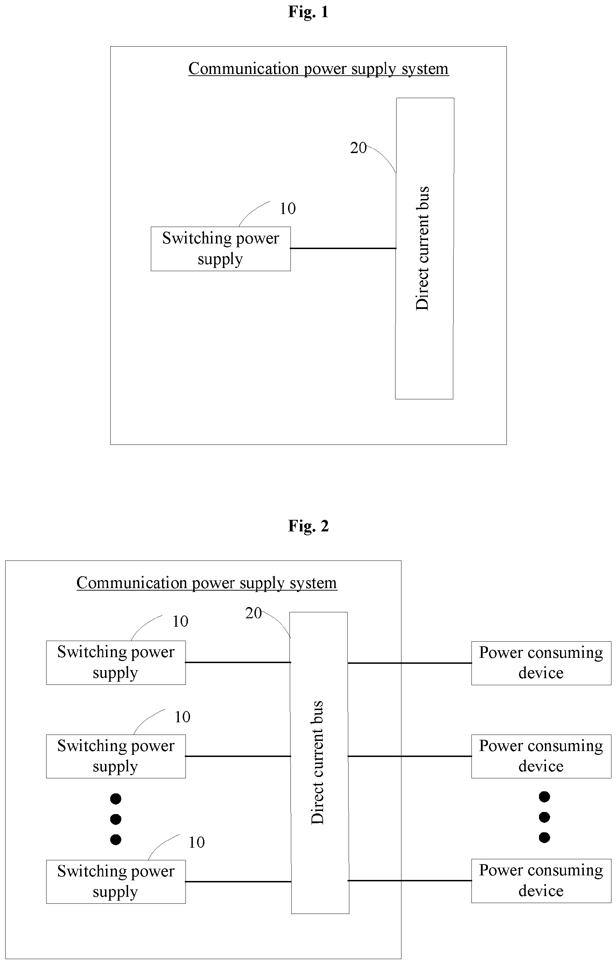

As shown in Fig. 1, a communication power supply system provided in an embodiment of the present disclosure may include a switching power supply 10 and a direct current bus 20, where the switching power supply 10 is connected to the direct current bus 20. In the embodiment, there may be one or more switching power supplies 10, and the number of the switching power supplies 10 may be set rationally according to the actual situation. For instance, there may be a plurality of switching power supplies 10, as shown in Fig. 2. A second connection member of each switching power supply 10 is connected to the direct current bus 20. It may be understood that each switching power supply 10 concentrates its output electric power on the direct current bus 20, such that the direct current bus 20 may provide a working power supply for one or more power consuming devices.

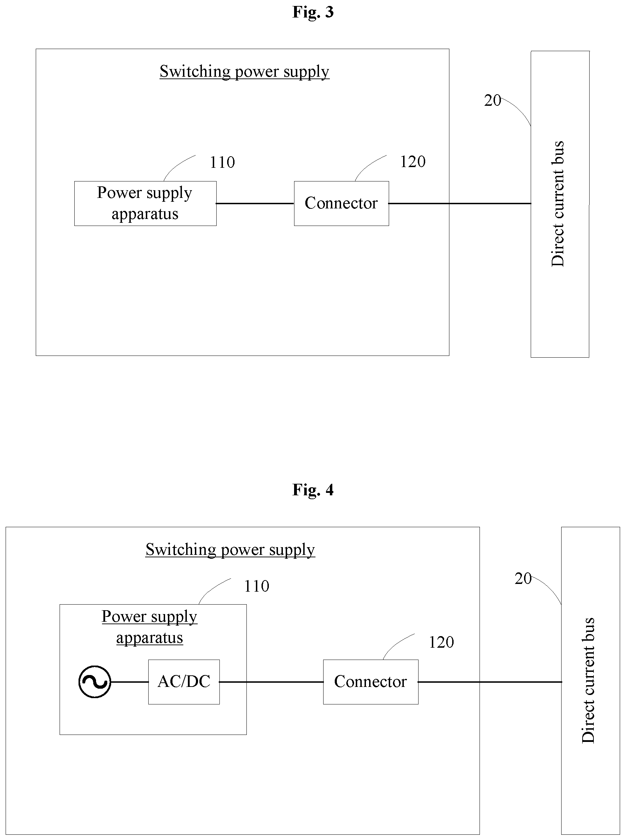

As shown in Fig. 3, a switching power supply 10 provided in an embodiment of the present disclosure may include a power supply apparatus 110 and a connector 120. In the embodiment, the power supply apparatus 110 is capable of outputting direct current power, and powering-on and powering-off of the power supply apparatus 110 are controllable. For instance, the power supply apparatus may include one or more switch tubes, and the power supply apparatus 110 may be controlled to be powered on or powered off by controlling the switch tubes. The connector 120 is connected to an output end of the power supply apparatus 110 and is connected to a direct current bus 20. In this way, the direct current power output from the power supply apparatus 110 may be transmitted to the direct current bus 20 through the connector 120. For instance, the power supply apparatus 110 may include an Alternating Current/Direct Current (AC/DC) rectifier as shown in Fig. 4, and the AC/DC rectifier has an input end that may be connected to an alternating current power supply and an output end that may be connected to the connector 120. In this way, when the power supply apparatus 110 is powered on, alternating current power output from the alternating current power supply is converted into the direct current power after rectification, and the direct current power is transmitted to the direct current bus 20 through the connector 120.

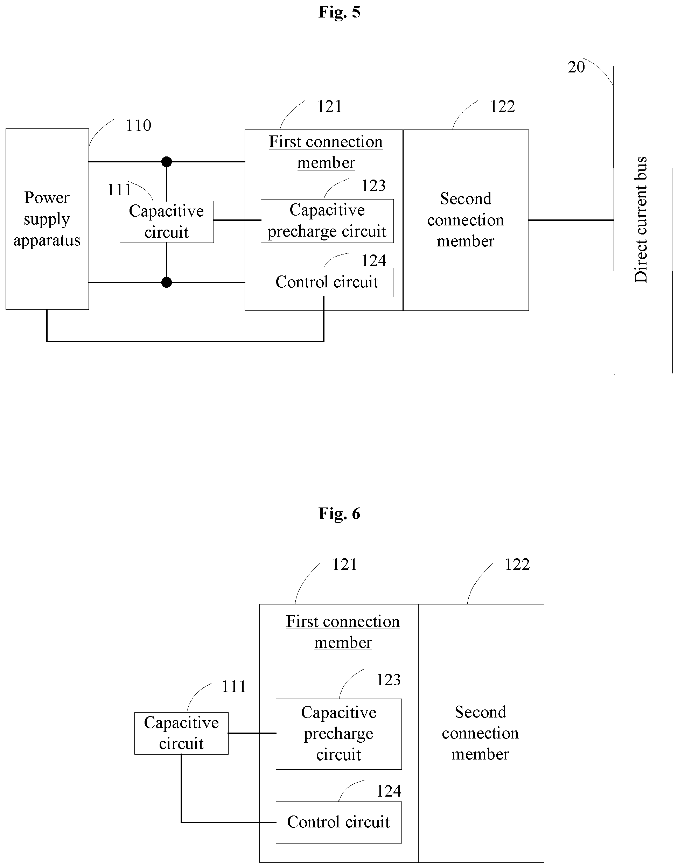

As shown in Fig. 5, a connector 120 provided in an embodiment of the present disclosure may include a first connection member 121, a second connection member 122, a capacitive precharge circuit 123, and a control circuit 124. In addition, the power supply apparatus 110 is provided with a capacitive circuit 111 at an output end in the embodiment. That is, the capacitive circuit 111 is connected in parallel with the output end of the power supply apparatus 110. It may be understood that the capacitive circuit 111 may ensure output stability of the switching power supply 10, such that the switching power supply 10 may output better electric power.

The first connection member 121 is detachably connected to the second connection member 122, such that the switching power supply 10 may be hot plugged and pulled out in a card-plugging mode, where the first connection member 121 is connected to the output end of the power supply apparatus 110, and the second connection member 122 is connected to the direct current bus 20. In an implementation, the second connection member 122 may be fixed relative to the direct current bus 20, such that plugging and pulling-out of the first connection member 121 may be facilitated. For instance, the first connection member 121 and the second connection member 122 may be a plug-in card and a socket respectively, and the socket is fixed relative to the direct current bus 20.

Both the capacitive precharge circuit 123 and the control circuit 124 may be arranged on the first connection member 121. The capacitive precharge circuit 123 is connected to the capacitive circuit 111, and the control circuit 124 is configured to control the power supply apparatus 110 to be powered on and powered off. For instance, the control circuit 124 may be connected to a switch tube in the power supply apparatus 110, such that the control circuit 124 may power on the power supply apparatus 110 by controlling the switch tube to be switched on, and similarly, may power off the power supply apparatus 110 by controlling the switch tube to be switched off.

In the embodiment, in a process of plugging the first connection member 121 into the second connection member 122 (that is, in a hot plugging process), the direct current bus 20 charges the capacitive circuit 111 through the capacitive precharge circuit 123, and then the control circuit 124 controls the power supply apparatus 110 to be powered on. Specifically, before hot plugging of the switching power supply, the capacitive circuit has a low voltage at two ends because the capacitive circuit is not charged. In this case, if the power supply apparatus is powered on, a voltage difference between the capacitive circuit and the direct current bus is too great, resulting in arcing. Therefore, in the process of plugging the first connection member 121 into the second connection member 122 in the embodiment, the capacitive precharge circuit 123 is firstly connected to the direct current bus 20, such that the direct current bus 20 charges the capacitive circuit 111 firstly. It may be understood that after being charged, the capacitive circuit 111 has a voltage, close to that of the direct current bus, at the two ends. After the capacitive circuit 111 is charged, the control circuit 124 controls the power supply apparatus 110 to be powered on. In this case, the capacitive circuit 111 has the voltage close to that of the direct current bus 20, such that arcing may be avoided. In a process of pulling out the first connection member 121 from the second connection member 122 (that is, in a hot pulling-out process), the control circuit 124 controls the power supply apparatus 110 to be powered off before the power supply apparatus 110 is disconnected from the direct current bus 20. Specifically, during hot pulling-out of the switching power supply, arcing may occur when the power supply apparatus is disconnected from the direct current bus. Therefore, in the process of pulling out the first connection member 121 from the second connection member 122 in the embodiment, the control circuit 124 controls the power supply apparatus 110 to be powered off before the power supply apparatus 110 is disconnected from the direct current bus 20, such that arcing may be avoided. In this way, when the connector provided in the embodiment is used in the switching power supply, the switching power supply may support hot plugging and pulling-out, and arcing may be avoided during hot plugging and pulling-out, such that accidents caused by arcing and sparking are effectively reduced.

Therefore, it may be seen from the above discussion that, compared with the related art, the embodiments of the present disclosure do not need to additionally provide a current limiting resistor on an output capacitor (that is, the capacitive circuit 111 described above) of the switching power supply, such that power consumption of the switching power supply may be reduced. Meanwhile, a current detection apparatus and an arc extinguishing structure do not need to be additionally provided, such that the structure of the switching power supply may be simplified.

As shown in Fig. 6, the control circuit 124 may be connected to the capacitive circuit 111 in an embodiment, such that the capacitive circuit 111 may provide a working power supply for the control circuit 124 after being charged. Specifically, in a process of plugging the first connection member 121 into the second connection member 122, the direct current bus 20 may be incapable of charging the capacitive circuit 111 in some abnormal cases (for instance, cases such as poor contact, or broken wire). In this case, arcing may be caused if the control circuit 124 controls the power supply apparatus 110 to be powered on. Based on the above structure, the capacitive circuit 111 supplies power to the control circuit 124 in the embodiment. In the presence of the above abnormal cases, the capacitive circuit 111 cannot supply power to the control circuit 124 because the capacitive circuit is not charged, such that the power supply apparatus 110 may be prevented from being powered on, and further arcing may be avoided. In addition, in the absence of the abnormal cases, the direct current bus 20 may charge the capacitive circuit 111, so that the capacitive circuit 111 is capable of normally supplying power to the control circuit 124, such that control of the control circuit 124 over the power supply apparatus 110 is not influenced in the plugging process. For instance, the capacitive circuit 111 may supply power to the control circuit 124 through an auxiliary circuit, and for instance, may supply power to the control circuit 124 through a boost buck circuit.

In an embodiment, the first connection member 121 is provided with a plurality of first metal pieces, and the second connection member 122 is provided with a plurality of second metal pieces respectively corresponding to the plurality of first metal pieces. It may be understood that the first metal pieces can be detachably connected to the second metal pieces. For instance, the first metal pieces and the second metal pieces may be metal pins and metal socket pieces, respectively. In an implementation, the number of the plurality of first metal pieces may be equal to the number of the plurality of second metal pieces, and one first metal piece corresponds to one second metal piece, i.e., the plurality of first metal pieces are in one-to-one correspondence with the plurality of second metal pieces.

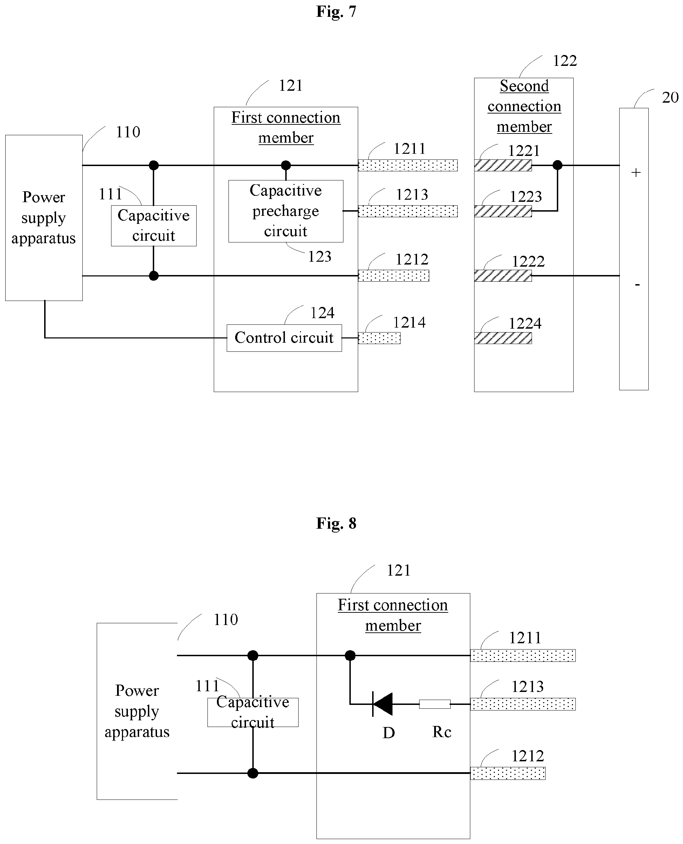

As shown in Fig. 7, the plurality of first metal pieces may include a power positive metal piece 1211, a power ground metal piece 1212, a precharge metal piece 1213, and an in-situ metal piece 1214. The power positive metal piece 1211 is connected to a positive output end of the power supply apparatus 110, and the power ground metal piece 1212 is connected to a negative output end of the power supply apparatus 110. Accordingly, the second metal piece 1221 corresponding to the power positive metal piece 1211 is connected to a positive electrode of the direct current bus 20, and the second metal piece 1212 corresponding to the power ground metal piece 1212 is connected to a negative electrode of the direct current bus 20. The precharge metal piece 1213 is connected to the capacitive precharge circuit 123, and the in-situ metal piece 1214 is connected to the control circuit 124. In an implementation, the second metal piece 1223 corresponding to the precharge metal piece 1213 may be connected to the second metal piece 1221, that is, connected to the positive electrode of the direct current bus 20.

In the embodiment, the in-situ metal piece 1214 has a length smaller than a length of the power positive metal piece 1211, and the power positive metal piece 1211 has a length smaller than a length of the power ground metal piece 1212 and a length of the precharge metal piece 1213. In this way, in a process of plugging the first connection member 121 into the second connection member 122, the power ground metal piece 1212 and the precharge metal piece 1213 make contact with the corresponding second metal pieces, then the power positive metal piece 1211 makes contact with the corresponding second metal piece, and finally the in-situ metal piece 1214 makes contact with the corresponding second metal piece. While in the process of pulling out the first connection member 121 from the second connection member 122, the in-situ metal piece 1214 is separated from the corresponding second metal piece, then the power positive metal piece 1211 is separated from the corresponding second metal piece, and finally the power ground metal piece 1212 and the precharge metal piece 1213 are separated from the corresponding second metal pieces respectively. In an implementation, the length of the power ground metal piece 1212 may be equal to the length of the precharge metal piece 1213.

Based on the above structure, in the process of plugging the first connection member 121 into the second connection member 122, when the precharge metal piece 1213 makes contact with the second metal piece 1223 and the power ground metal piece 1212 makes contact with the second metal piece 1222, the direct current bus 20 and the capacitive circuit 111 form a charging loop, such that the direct current bus 20 charges the capacitive circuit 111. Then, when the in-situ metal piece 1214 makes contact with the second metal piece 1224, the control circuit 124 controls the power supply apparatus 110 to be powered on. Specifically, in a hot plugging process, the precharge metal piece 1213 and the power ground metal piece 1212 firstly make contact with the corresponding second metal pieces respectively. Since the direct current bus 20 outputs electric power (for instance, there may be one or more other switching power supplies that supply electric power to the direct current bus 20), the direct current bus 20 may charge the capacitive circuit 111 firstly (that is, the direct current bus 20 supplies power to the capacitive circuit 111). It may be seen from the figure that the charging loop is: the positive electrode of the direct current bus 20-the second metal piece 1223-the precharge metal piece 1213-the capacitive precharge circuit 123-the capacitive circuit 111-the power ground metal piece 1212-the second metal piece 1222-the negative electrode of the direct current bus 20. Then, the power positive metal piece 1211 makes contact with the second metal piece 1221, after which a power supply relation between the capacitive circuit 111 and the direct current bus 20 restores to normal, that is, the capacitive circuit 111 supplies power to the direct current bus 20. It may be seen that the power positive metal piece 1211 has a length smaller than a length of the power ground metal piece 1212 and a length of the precharge metal piece 1213, which may ensure that the capacitive circuit 111 may be charged firstly. Finally, the in-situ metal piece 1214 makes contact with the second metal piece 1224. Since the in-situ metal piece 1214 has a length smaller than a length of the power positive metal piece 1211, the power supply apparatus 110 is already in contact with the direct current bus 20, and in this case, the capacitive circuit 111 has a voltage close to that of the direct current bus 20, so that arcing may be avoided when the control circuit 124 controls the power supply apparatus 110 to be powered on. In addition, it may be understood that the switching power supply 10 may constantly supply power to the direct current bus 20 after the power supply apparatus 110 is powered on.

In the process of pulling out the first connection member 121 from the second connection member 122, the control circuit 124 controls the power supply apparatus 110 to be powered off when the in-situ metal piece 1214 is separated from the second metal piece 1224. Specifically, in a hot pulling-out process, the in-situ metal piece 1214 is firstly separated from the second metal piece 1224. Since the in-situ metal piece 1214 has a length smaller than a length of the power positive metal piece 1211, the power supply apparatus 110 is still in contact with the direct current bus 20, such that arcing may be avoided when the control circuit 124 controls the power supply apparatus 110 to be powered off.

In an embodiment, the capacitive precharge circuit 123 includes a diode D and a current limiting resistor Rc as shown in Fig. 8. The diode D has a positive electrode connected to the precharge metal piece 1213 and a negative electrode connected to the capacitive circuit 111. The current limiting resistor Rc is connected between the capacitive circuit 111 and the precharge metal piece 1213. Specifically, the diode D may prevent a loop from being formed between the precharge metal piece 1213 and the power positive metal piece 1211, and the current limiting resistor Rc may limit a charging current flowing through the capacitive circuit 111.

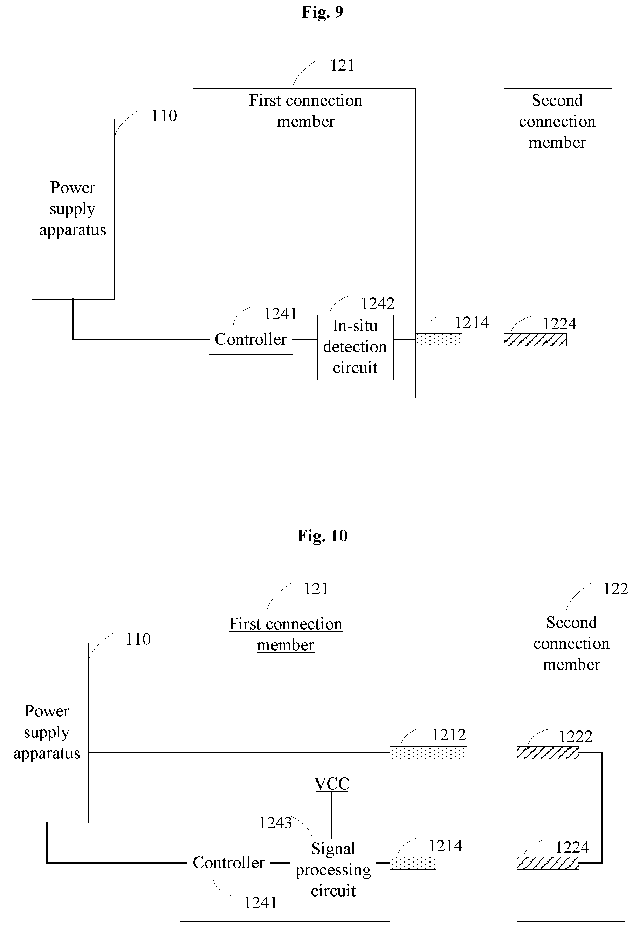

In an embodiment, the control circuit 124 may include a controller 1241 and an in-situ detection circuit 1242 as shown in Fig. 9. The in-situ detection circuit 1242 is connected between the in-situ metal piece 1214 and the controller 1241. The controller 1241 may include a microcontroller unit (MCU) and is connected to a control end of the power supply apparatus 110. Based on the above structure, when the in-situ metal piece 1214 is already in contact with a second metal piece 1224, the in-situ detection circuit 1242 transmits a first electrical signal to the controller 1241, and when the in-situ metal piece 1214 is already separated from the second metal piece 1224, the in-situ detection circuit 1242 transmits a second electrical signal to the controller 1241, such that the controller 1241 controls the power supply apparatus 110 to be powered on or powered off in response to detecting that an electrical signal transmitted from the in-situ detection circuit 1242 matches a preset change. Specifically, in a hot plugging process, when a position relation between the in-situ metal piece 1214 and the second metal piece 1224 changes from being separated to being in contact, the electrical signal transmitted from the in-situ detection circuit 1242 to the controller 1241 may change from the second electrical signal to the first electrical signal. In this way, when the controller 1241 detects that the electrical signal transmitted from the in-situ detection circuit 1242 satisfies the preset change, it may be determined that the in-situ metal piece 1214 is already in contact with the second metal piece 1224, such that the power supply apparatus 110 may be controlled to be powered on. On the contrary, in a hot pulling-out process, when a position relation between the in-situ metal piece 1214 and the second metal piece 1224 changes from being in contact to being separated, the electrical signal transmitted from the in-situ detection circuit 1242 to the controller 1241 may change from the first electrical signal to the second electrical signal. In this way, when the controller 1241 detects that the electrical signal transmitted from the in-situ detection circuit 1242 satisfies the preset change, it may be determined that the in-situ metal piece 1214 is already separated from the second metal piece 1224, such that the power supply apparatus 110 may be controlled to be powered off.

In an implementation, the in-situ detection circuit 1242 may include a signal source circuit VCC and a signal processing circuit 1243 as shown in Fig. 10. The signal source circuit VCC may include, but is not limited to, a power output circuit of the controller 1241, and is connected to the signal processing circuit 1243. The signal processing circuit 1243 is connected between the in-situ metal piece 1214 and the controller 1241. In addition, the second metal piece 1224 is connected to the second metal piece 1222. Based on the above structure, when the in-situ metal piece 1214 is already in contact with the second metal piece 1224, the signal source circuit VCC transmits a first electrical signal to the controller 1241 through the signal processing circuit 1243. On the contrary, when the in-situ metal piece 1214 is already separated from the second metal piece 1224, the signal source circuit VCC transmits a second electrical signal to the controller 1241 through the signal processing circuit 1243.

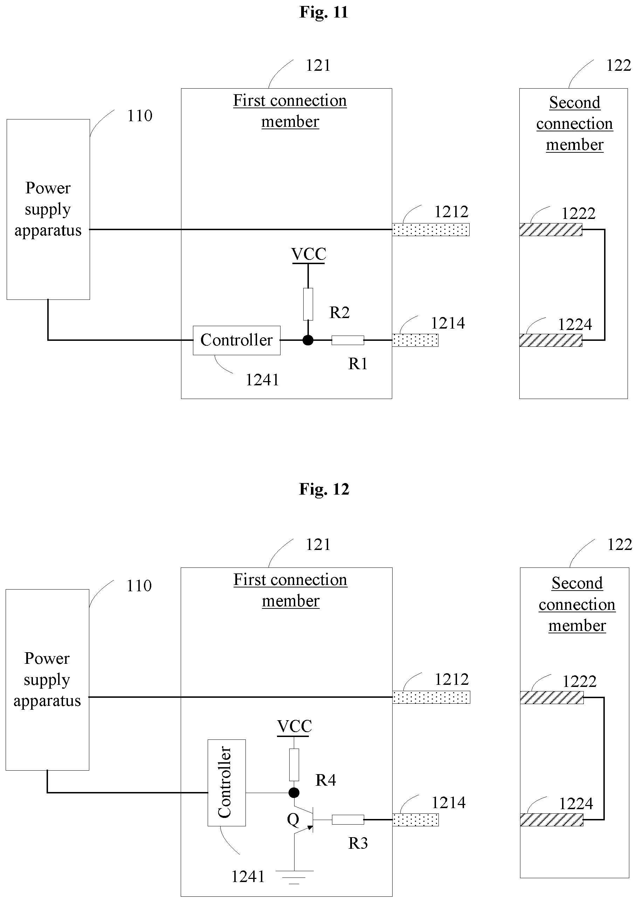

For instance, the signal processing circuit 1243 may include a first resistor R1 and a second resistor R2 as shown in Fig. 11. The first resistor R1 has a first end connected to the in-situ metal piece 1214 and a second end connected to the controller 1241. The second resistor R2 is connected between the signal source circuit VCC and the second end of the first resistor R2. In this way, when the in-situ metal piece 1214 is already in contact with the second metal piece 1224, the signal source circuit VCC outputs two paths of electrical signals through the second resistor R2, where one path of electrical signal is output to the controller 1241 while the other path of electrical signal is output to the ground through the first resistor R1 (which has a circuit loop of VCC-R2-R1-1214-1224-1222-1212). It may be seen that the first electrical signal output from the signal source circuit VCC to the controller 1241 is divided by another loop, such that the first electrical signal may be understood as a low level signal. While when the in-situ metal piece 1214 is already separated from the second metal piece 1224, the signal source circuit VCC directly outputs the second electrical signal to the controller 1241 through the second resistor R2, and in this case, no voltage division occurs, such that the second electrical signal may be understood as a high level signal.

For instance, the signal processing circuit 1243 may include a third resistor R3, a fourth resistor R4, and a switch tube Q as shown in Fig. 12. The switch tube Q may include a triode, a metal oxide semiconductor (MOS) field effect transistor, etc. The switch tube Q has a control end connected to the in-situ metal piece 1214 through the third resistor R3, a first switch end connected to the signal source circuit VCC through the fourth resistor R4, and a second switch end grounded. In this way, when the in-situ metal piece 1214 is already in contact with a second metal piece 1224, the control end of the switch tube Q is already in connection with the power ground metal piece 1212 (reference may be made to the above discussion for a specific principle), such that a current may be input into the control end of the switch tube Q, that is, the switch tube Q is in a switched-on state. In this way, an electrical signal output from the signal source circuit VCC through the fourth resistor R4 is mainly input into the ground. That is, the first electrical signal output from the signal source circuit VCC to the controller 1241 may be understood as a low level signal. When the in-situ metal piece 1214 is already separated from the second metal piece 1224, no current may be input into the control end of the switch tube Q, that is, the switch tube Q is in a switched-off state. In this way, an electrical signal output from the signal source circuit VCC through the fourth resistor R4 is mainly input into the controller 1241. That is, the first electrical signal output from the signal source circuit VCC to the controller 1241 may be understood as a high level signal.

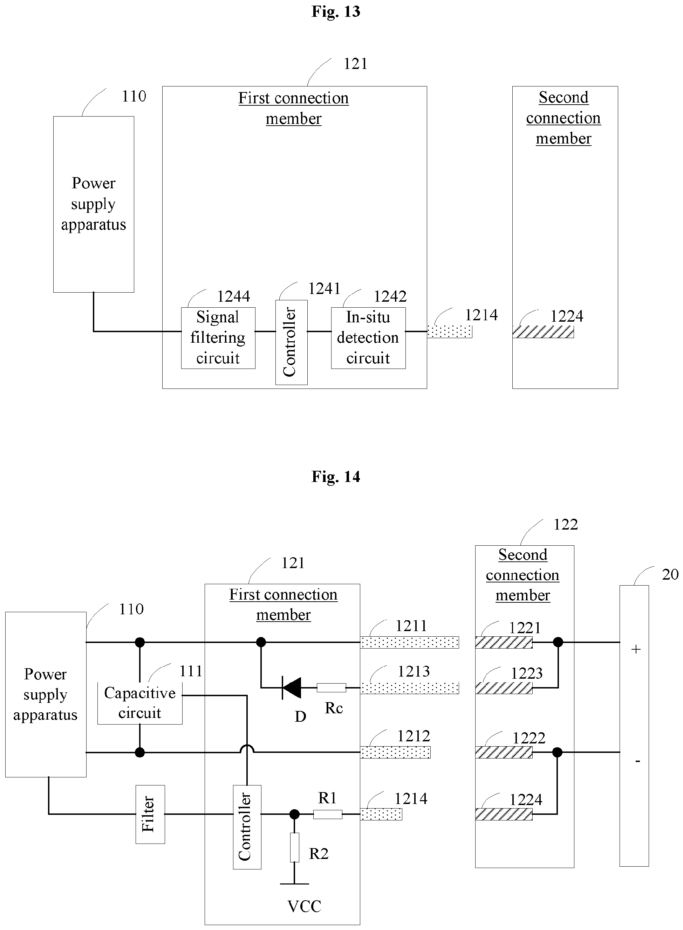

In an implementation, the in-situ detection circuit 1242 may be connected to the controller 1241 through a signal filtering circuit 1244 as shown in Fig. 13. The signal filtering circuit 1244 may include a filter. It may be understood that the signal filtering circuit 1244 may output a better electrical signal to the controller 1244.

To sum up, Fig. 14 is a schematic structural diagram of an exemplary circuit of a connector according to an embodiment of the present disclosure. Reference may be made to the accompanying drawings for a specific connection relation, which will not be repeated herein. In the instance, in a process of plugging the first connection member 121 into the second connection member 122, the precharge metal piece 1213 and the power ground metal piece 1212 firstly make contact with their corresponding second metal pieces, such that the direct current bus 20 charges the capacitive circuit 111 firstly. It may be understood that after being charged, the capacitive circuit 111 may supply power to the controller. After the in-situ metal piece 1214 makes contact with the second metal piece 1224, the controller detects that an electrical signal satisfies a preset change (that is, changes from a high level to a low level), and controls the power supply apparatus 110 to be powered on. It may be understood that since the in-situ metal piece 1214 has a length smaller than a length of the power positive metal piece 1211, a connection already exists between the power supply apparatus 110 and the direct current bus 20, and in this case, the capacitive circuit 111 has a voltage close to that of the direct current bus 20. In this way, arcing may be avoided. In a process of pulling out the first connection member 121 from the second connection member 122, the in-situ metal piece 1214 is firstly separated from the second metal piece 1224, and the controller detects that an electrical signal satisfies a preset change (that is, changes from a low level to a high level), and controls the power supply apparatus 110 to be powered off. It may be understood that since the in-situ metal piece 1214 has a length smaller than a length of the power positive metal piece 1211, a connection still exists between the power supply apparatus 110 and the direct current bus 20. In this way, arcing may be avoided.

What are described above are merely exemplary embodiments of the present disclosure, but do not limit the protection scope of the present disclosure. Any change or substitution that may be easily conceived by those skilled in the art within the technical scope of the present disclosure should fall within the protection scope of the present disclosure. Therefore, the protection scope of the present disclosure should be subject to the protection scope of the claims.

## Claims

1. A connector, comprising:
a first connection member connected to an output end of a power supply apparatus, wherein the power supply apparatus is provided with a capacitive circuit at the output end;
a second connection member connected to a direct current bus of a communication power supply system and detachably connected to the first connection member;
a capacitive precharge circuit arranged on the first connection member and connected to the capacitive circuit; and
a control circuit arranged on the first connection member, connected to the power supply apparatus, and configured to control the power supply apparatus to be powered on and powered off, wherein
in a process of plugging the first connection member into the second connection member, the direct current bus charges the capacitive circuit through the capacitive precharge circuit, and then the control circuit controls the power supply apparatus to be powered on; and in a process of pulling out the first connection member from the second connection member, the control circuit controls the power supply apparatus to be powered off before the power supply apparatus is disconnected from the direct current bus.

2. The connector according to claim 1, wherein the control circuit is connected to the capacitive circuit, such that the capacitive circuit, after being charged, provides a working power supply for the control circuit.

3. The connector according to claim 1, wherein the first connection member is provided with a plurality of first metal pieces, and the second connection member is provided with a plurality of second metal pieces respectively corresponding to the plurality of first metal pieces;
the plurality of first metal pieces comprise a power positive metal piece, a power ground metal piece, a precharge metal piece and an in-situ metal piece; and the in-situ metal piece has a length smaller than a length of the power positive metal piece, and the power positive metal piece has a length smaller than a length of the power ground metal piece and a length of the precharge metal piece;
the power positive metal piece is connected to a positive output end of the power supply apparatus, and the power ground metal piece is connected to a negative output end of the power supply apparatus;
the precharge metal piece is connected to the capacitive precharge circuit, such that in the process of plugging the first connection member into the second connection member, when the precharge metal piece makes contact with the corresponding second metal piece and the power ground metal piece makes contact with the corresponding second metal piece, the direct current bus and the capacitive circuit form a charging loop to enable the direct current bus to charge the capacitive circuit; and
the in-situ metal piece is connected to the control circuit, such that in the process of plugging the first connection member into the second connection member, when the in-situ metal piece makes contact with the corresponding second metal piece, the control circuit controls the power supply apparatus to be powered on, and in the process of pulling out the first connection member from the second connection member, when the in-situ metal piece is separated from the corresponding second metal piece, the control circuit controls the power supply apparatus to be powered off.

4. The connector according to claim 3, wherein the capacitive precharge circuit comprises a diode and a current limiting resistor; the diode has a positive electrode connected to the precharge metal piece and a negative electrode connected to the capacitive circuit; and the current limiting resistor is connected between the capacitive circuit and the precharge metal piece.

5. The connector according to claim 3 or 4, wherein the control circuit comprises a controller and an in-situ detection circuit, the in-situ detection circuit is connected between the in-situ metal piece and the controller, and the controller is connected to a control end of the power supply apparatus; and
when the in-situ metal piece is already in contact with the corresponding second metal piece, the in-situ detection circuit transmits a first electrical signal to the controller, and when the in-situ metal piece is already separated from the corresponding second metal piece, the in-situ detection circuit transmits a second electrical signal to the controller, such that the controller controls the power supply apparatus to be powered on or powered off in response to detecting that an electrical signal transmitted from the in-situ detection circuit matches a preset change.

6. The connector according to claim 5, wherein the second metal piece corresponding to the in-situ metal piece is connected to the second metal piece corresponding to the power ground metal piece;
the in-situ detection circuit comprises a signal source circuit and a signal processing circuit, the signal source circuit is connected to the signal processing circuit, and the signal processing circuit is connected between the in-situ metal piece and the controller; and
when the in-situ metal piece is already in contact with the corresponding second metal piece, the signal source circuit transmits a first electrical signal to the controller through the signal processing circuit; and when the in-situ metal piece is already separated from the corresponding second metal piece, the signal source circuit transmits a second electrical signal to the controller through the signal processing circuit.

7. The connector according to claim 6, wherein the signal processing circuit comprises a first resistor and a second resistor; the first resistor has a first end connected to the in-situ metal piece and a second end connected to the controller; and the second resistor is connected between the signal source circuit and the second end of the first resistor; or,
the signal processing circuit comprises a third resistor, a fourth resistor, and a switch tube; and the switch tube has a control end connected to the in-situ metal piece through the third resistor, a first switch end connected to the signal source circuit through the fourth resistor, and a second switch end grounded.

8. The connector according to claim 5, wherein the in-situ detection circuit is connected to the controller through a signal filtering circuit.

9. A switching power supply, comprising a power supply apparatus and the connector according to any one of claims 1-8, wherein an output end of the power supply apparatus is connected to the connector.

10. A communication power supply system, comprising a direct current bus and one or more switching power supplies according to claim 9, wherein the direct current bus is connected to the one or more switching power supplies.
